# EUROPEAN PATENT APPLICATION

(11) **EP 4 451 621 A1**
(43) Date of publication of application: **23.10.2024**
(21) Application number: 22916831.5
(22) Date of filing: 30.12.2022
(51) Int. Cl.: H04L 12/28, H04L 67/00, G06F 8/65

(54) **HOME APPLIANCE, METHOD FOR UPGRADING HOME APPLIANCE, MANAGEMENT SERVER, METHOD BY WHICH MANAGEMENT SERVER UPGRADES HOME APPLIANCE, AND SYSTEM FOR UPGRADING HOME APPLIANCE**

(30) Priority: 31.12.2021 KR 20210194627
(71) Applicant: LG Electronics Inc., Yeongdeungpo-gu Seoul 07336 (KR)
(72) Inventor: LEE, In Seop, Seoul 08592 (KR); YANG, Hyejeong, Seoul 08592 (KR); JEON, Chan Sung, Seoul 08592 (KR)
(74) Representative: Vossius & Partner Patentanwälte Rechtsanwälte mbB
(86) International application number: PCT/KR2022/021699
(87) International publication number: WO 2023/128690

(57) **Abstract**

The present invention relates to a home appliance, a method for upgrading a home appliance, a management server, a method by which a management server upgrades a home appliance, and a system for upgrading a home appliance.

According to a system for upgrading a home appliance according to the present invention, a home appliance transmits a package ID to a server; when new software is uploaded from the server, the new software is automatically downloaded to the home appliance; and if the dependency of a content ID of the new software on the package ID of the home appliance is satisfied, the home appliance performs an upgrade to the new software, wherein, when a user selects an individual function of the new software, an upgrade to the selected individual function is executed.

According to the present invention, a home appliance can be upgraded by selecting an individual function of the new software as desired by a user.

## Description

### [Technical Field]

The present disclosure relates to a home appliance, a method for upgrading a home appliance, a management server, a method by which a management server upgrades a home appliance, and a system for upgrading a home appliance, which upgrade an individual function of a home appliance comprising a refrigerator, a washing machine, an air conditioner and the like.

### [Background Art]

Home appliances such as a household appliance, an electronic product and the like are placed and operates in a variety of environments, and depending on their launch time points, have a different structure or different component. After they are launched and sold, their functions may need to be upgraded or a function may need to be added to them.

In most cases, the firmware of a home appliance is upgraded to solve an error of the home appliance and the like after the home appliance is sold, and in the case where a new function that meets the needs of the user is added to a home appliance for an upgrade of the home appliance after the home appliance is launched, the user needs to purchase a new home appliance with the new function. It is difficult to provide a newly added function reflecting a change in the customer's lifestyle or a technical advancement to an existing home appliance.

Under the circumstances, there is a growing need to develop a technology for enabling the user to readily upgrade an individual function added or check an upgradable function, request an upgrade and check an upgrade state or upgrade results, such that the user manages a variety of home appliances connecting to the Internet.

### [Description of the Invention]

### [Technical Problems]

The objective of the present disclosure is to provide a home appliance, a method for upgrading a home appliance, a management server, a method by which a management server upgrades a home appliance, and a system for upgrading a home appliance, which may selectively upgrade an individual function of a home appliance.

Aspects according to the present disclosure are not limited to the above ones, and other aspects and advantages that are not mentioned above may be clearly understood from the following description and may be more clearly understood from the embodiments set forth herein. Additionally, the aspects and advantages in the present disclosure may be realized via means and combinations thereof that are described in the appended claims.

### [Technical Solutions]

In a system for upgrading a home appliance according to the present disclosure, a management server may comprise: a server communication unit configured to receive a package ID from a home appliance; a server storage unit configured to store the received package ID; and a server control unit configured to automatically download software data having a content ID to the home appliance in a case where the server control unit receives the software data uploaded through an upgrade management web page, to determine dependency of the received package ID and the content ID, to transition the home appliance/the software data to an upgrade preparation state in a case where the dependency is satisfied, and to control the home appliance such that an individual function of the home appliance is selectively upgraded.

In the management server according to the present disclosure, the server control unit may control such that after the software data are automatically downloaded completely to the home appliance and then an individual function of the home appliance, corresponding to the content ID, is upgraded completely, setting or availability of the completely upgraded individual function is notified to a screen of the home appliance or an app of a user terminal.

In the management server according to the present disclosure, in relation to determination of dependency of the received package ID and the content ID, the server control unit may determine the dependency of the received package ID and the content ID at a time point when the software data are automatically downloaded completely to the home appliance, or at a time point when an upgrade function of the home appliance is inquired on an app of a user terminal.

In the management server according to the present disclosure, in relation to dependency of the received package ID and the content ID, the server control unit may determine that dependency of the content ID on the received package ID is satisfied in a case where firmware data assisted by the content ID is completely downloaded to the home appliance, or in a case where firmware of the home appliance assists with the content ID.

In the management server according to the present disclosure, when determining that the software data are automatically downloaded completely to the home appliance and that the dependency of the content ID on the received package ID is satisfied, the server control unit may control the home appliance such that the home appliance transitions to an upgrade preparation state.

In the management server according to the present disclosure, at a time point when the software data starts to be downloaded automatically to the home appliance, the server control unit may store and cash a flag notifying that a download starts to assist with content program data corresponding to the content ID, in a certain area of the server storage unit, and as the software data starts to be downloaded automatically, a function to be assisted by firmware to be downloaded automatically may transition to a downloading state, and as the software data are automatically downloaded completely, the server control unit may control the home appliance such that the home appliance transitions to a preparation state.

In the management server according to the present disclosure, in a case where the content ID is not dependent on the received package ID after the software data are automatically downloaded completely to the home appliance, the server control unit may control the home appliance such that the home appliance does not transition to an upgrade preparation state.

In the management server according to the present disclosure, the server control unit may determine that dependency of the content ID on the received package ID and transitions software data to an upgrade preparation state, and in a case where software data in an upgrade preparation state is selected based on a user input from the home appliance or a user terminal, the server control unit may control such that the selected software data in the upgrade preparation state are downloaded to the home appliance to upgrade the home appliance.

In the management server according to the present disclosure, the server control unit may determine that dependency of the content ID on the received package ID before receiving the software data uploaded, registering the software data with the server storage unit and downloading the software data to the home appliance, and in the case where the dependency is satisfied, the server control unit may transition the home appliance to an upgrade preparation state and control the home appliance to selectively download and upgrade an individual function of the home appliance.

In the management server according to the present disclosure, the server control unit may determine dependency of the content ID on the received package ID and transition software data to an upgrade preparation state at a time point when the server control unit receives the software data uploaded and registers the software data with the server storage unit, provide a list of upgradable content programs to the user terminal, and based on a selection input of a user, download a content program selected by the user terminal selectively to the home appliance, and control the home appliance such that the home appliance is upgraded.

In a system for upgrading a home appliance according to the present disclosure, a home appliance may comprise: a function performance unit configured to perform unique functions; a communication unit configured to communicate with a management server to upgrade all or part of the unique functions; a storage unit configured to store information on firmware needed to perform the unique functions and a package ID; a user interface unit configured to provide operation information on the unique functions, and information on an upgrade; and a home appliance control unit configured to connect to the communication unit through a local bus, and to control entire operations.

In the home appliance, the communication unit may transmit the package ID to the management server, automatically download and receive software data from the management server, transition the software data to an upgrade preparation state in a case where dependency of a content ID included in the software data on the package ID is satisfied, and then the communication unit may notify the preparation state to the user interface unit or an app of the user terminal and then upgrade an individual function selected by the user interface unit or the user terminal among the software data.

In the home appliance, after an individual function selected by the user interface unit or the user terminal is completely upgraded, the communication unit may control such that displays a message notifying that the individual function upgraded completely is settable or available through a screen on a display module of the user interface unit or in a voice through a speaker module of the user interface unit.

In the home appliance, the communication unit may comprise a memory configured to download and receive, and store at least one or more of the software data in advance from the management server, and the communication unit may receive a selection message selecting at least a portion of software among the at least one or more of the software data from the user interface unit, and based on the selection message, write the at least a portion of software data selected in the home appliance control unit.

In the home appliance, the communication unit may receive a selection message selecting at least a portion of software data among at least one or more of the software data from the user interface unit, and download and receive the at least a portion of software data selected based on the selection message, from the management sever, and store the at least a portion of software data in a memory, and write the at least a portion of software data in the home appliance control unit from the memory.

In the home appliance, the home appliance control unit may comprise an internal memory to which a partial download area is allocated to write the software data downloaded and received from the management server, and the communication unit may completely download the software data in the download area of the internal memory from the management server, and after rebooting, allocate the download area to a control area and upgrade the download area with the software data.

A method by which a management server upgrades a home appliance, according to the present disclosure, may comprise: receiving a package ID from a home appliance by a server communication unit; storing the received package ID by a server storage unit; receiving software data having a content ID and being uploaded through an upgrade management web page by a server control unit; automatically downloading the software data to the home appliance by the server communication unit; determining dependency of the received package ID and the content ID by the server control unit; transmitting an instruction for a transition to an upgrade preparation state to the home appliance by the server control unit in a case where the dependency is satisfied; and transmitting a message notifying that there is an individual function selection upgrade of the home appliance to the home appliance and a user terminal by the server control unit.

The method by which a management server upgrades a home appliance, according to the present disclosure, may further comprise: receiving a message notifying that an individual function is completely upgraded from the home appliance by the server communication unit; and transmitting a message notifying that an individual function is settable or available to the home appliance or the user terminal by the server control unit as the home appliance is upgraded completely.

In the method by which a management server upgrades a home appliance according to the present disclosure, transmitting a message notifying that an individual function is settable or available to the home appliance and the user terminal comprises in a case where the server control unit determines that dependency of the content ID on the received package ID is satisfied, controlling the home appliance such that the home appliance transitions to an upgrade preparation state by the server control unit, and transmitting a display instruction message instructing a display of an upgrade notification of the software data SW Upgrade Notification to the home appliance or the user terminal by the server control unit and controlling the home appliance by the server control unit such the software data designated based on a user selection are download to upgrade the home appliance.

A method for upgrading a home appliance, according to the present disclosure, may comprise: transmitting a package ID to a management server by a communication unit; automatically downloading and receiving software data from the management server by the communication unit; receiving an upgrade preparation instruction from the management server by the communication unit as dependency of a content ID included in the software data on the package ID is satisfied; transitioning to an upgrade preparation state by the communication unit; transmitting the upgrade preparation message to a user interface unit or an app of a user terminal by the communication unit; receiving an upgrade request message in relation to an individual function corresponding to a content ID selected among the software data from the user interface unit or the app of the user terminal by the communication unit; and upgrading an individual function corresponding to the selected content ID by the communication unit.

The method for upgrading a home appliance, according to the present disclosure, may further comprise after an individual function corresponding to the selected content ID is completely upgraded, displaying a message notifying that the completely upgraded individual function is settable or available by the communication unit through a screen on a display module of the user interface unit or in a voice through a speaker module of the user interface unit.

A system for upgrading a home appliance, according to the present disclosure, may comprise: a management server configured to provide software data; a home appliance configured to transmit a package ID in relation to a firmware combination to the management server; and a user terminal configured to receive an upgrade preparation message in relation to the software data from the management server, to output the upgrade preparation message to an app, and to transmit an upgrade request message to the management server based on a selection input in relation to the software data.

The management server may store the package ID received from the home appliance, and when receiving software data having a content ID and being uploaded through an upgrade management web page, automatically download the software data to the home appliance.

In the home appliance, a communication unit automatically may download and receive the software data from the management server, and store the software data in a memory, and transmit a download completion message to the management server.

When receiving the download completion message, the management server may determine dependency of the received package ID and the content ID, and when the dependency is satisfied, transmit a preparation instruction message instructing a transition to an upgrade preparation state to the home appliance.

The home appliance may transition to an upgrade preparation state, based on the received preparation instruction message, and transmit an upgrade notification message on a screen or to a user terminal.

The home appliance may upgrade an individual function input through the screen or selected by the user terminal, among the software data.

A method for upgrading a home appliance, according to the present disclosure, may comprise: providing firmware configuration information from a home appliance; in a case where software assisting with a new function of the home appliance is registered with a server and dependency of information on the firmware configuration information and on content of the software is satisfied, transitioning the software to an upgrade preparation state; and selecting software in the upgrade preparation state and upgrading the software to the home appliance.

The method for upgrading a home appliance, according to the present disclosure, may further comprise selecting one of the software in the upgrade preparation state.

The method for upgrading a home appliance, according to the present disclosure, may further comprise downloading all software registered with the server to the home appliance in advance before a transition to the upgrade preparation state.

The method for upgrading a home appliance, according to the present disclosure, may further comprise selecting software registered with the server in the upgrade preparation state, and then selectively downloading the software to the home appliance.

### [Advantageous Effects]

According to the present disclosure, an upgrade of an individual function of a home appliance may be assisted with.

According to the present disclosure, assistance with an upgrade function may be managed based on dependency information in relation to assistance with an individual function of firmware of a home appliance.

According to the present disclosure, the possibility of a function upgrade may be determined depending on a preparation state of firmware of a home appliance.

According to the present disclosure, when dependency of a package ID of a home appliance and software data completely downloaded on a content ID is satisfied, an upgrade preparation state may be secured, and the presence of an upgrade may be notified on the screen of a product or to an app of a user terminal.

According to the present disclosure, an individual function of a home appliance may be selected and upgraded based on an input to a user terminal or a button, among software data completely downloaded to the home appliance.

According to the present disclosure, a new function may be controlled based on an input to an app of a user terminal and a button of a product, based on setting information of an individual function upgraded of a home appliance.

According to the present disclosure, a system and method for selectively upgrading an individual function of a product rather than entirely upgrading product software S/W in a home appliance may be provided.

Specific effects are described along with the above-described effects, in the section of detailed description.

### [Brief Description of the Drawings]

FIG. 1 is a block diagram schematically showing an entire configuration of a system for upgrading a home appliance of an embodiment.
FIG. 2 is a block diagram showing a schematic configuration of a home appliance 10 of one embodiment.
FIG. 3 is a block diagram showing a schematic configuration of a user terminal 20 of one embodiment.
FIG. 4 is a block diagram showing a schematic configuration of a management server 30 of one embodiment.
FIGS. 5 and 6 are views showing an example of management of information on firmware combination of each home appliance, performed with a package ID by a management server in an embodiment.
FIG. 7 is a flowchart showing a basic upgrade method of a home appliance of one embodiment.
FIG. 8 and FIG. 9 are flowcharts showing a method for upgrading a home appliance of one embodiment.
FIGS. 10 to 13 are views showing an example of control of an individual function upgraded of a home appliance, on a user terminal of an embodiment,
FIGS. 14 and 15 are views showing a flow of a transmission packet and a transition view of an operation state in the system for upgrading a home appliance of an embodiment.
FIG. 16 is a view showing specific communication among the management sever, the home appliance and the user terminal of one embodiment.
FIG. 17 is a view showing an upgrade process in another embodiment.
FIG. 18 is an operational flowchart showing a method for upgrading a home appliance of another embodiment.

### [Description of Preferred Embodiments]

The above-described aspects, features and advantages are specifically described hereunder with reference to accompanying drawings such that one having ordinary skill in the art to which the present disclosure pertains may easily implement the technical spirit of the disclosure.

In the disclosure, detailed description of known technologies in relation to the subject matter of the disclosure is omitted if it is deemed to make the gist of the disclosure unnecessarily vague.

Hereinafter, embodiments according to the disclosure are specifically described with reference to the accompanying drawings such that one having ordinary skill in the art may embody the subject matter of the present disclosure readily. The subject matter of the present disclosure may be embodied in various different forms, and not limited to the embodiments set forth herein.

For clarity in description, particulars in no relation to the description of the subject matter of the present disclosure are omitted, and throughout the disclosure, identical or similar components may be given identical reference numerals.

Some embodiments according to the present disclosure are specifically described with reference to illustrative embodiments. Although identical components are illustrated in different drawings, the components may be given identical reference numerals.

In the disclosure, detailed description of known configurations or functions in relation to the subject matter of the disclosure is omitted if it is deemed to make the gist of the disclosure unnecessarily vague.

Terms such as first, second, A, B, (a), (b) and the like may be used to describe the components of the present disclosure. The terms are merely used to distinguish one component from another component, and are not intended to limit the essence, order, sequence, number, and the like of the component. When any one component is described as being "connected", "coupled" or "connected" to another component, any one component may be directly connected or coupled to another component, but an additional component may be "interposed" between the two components, or the two components may be "connected", "coupled" or "connected" by an additional component.

In addition, the components may be subdivided for convenience of description in implementing the subject matter of the present disclosure, but the components may be embodied in one device or module or one component may be segmented and embodied in a plurality of devices or modules.

First, an upgrade of a home appliance described in the present disclosure refers to an upgrade of software installed in the home appliance. The software may include firmware for operation of a control unit (i.e., micom) and a content program executed on firmware. In an example, the content program may be a program for setting a background screen of a display unit of a washing machine, a program for setting an administration course of a washing machine, and the like.

In addition, an upgrade process is defined as including a download procedure and an upgrade procedure. The download procedure is a procedure in which software data for writing software is received and stored in a home appliance. The upgrade procedure is a procedure in which software data stored in the home appliance is written to a control unit or micom.

The home appliance may include a control unit. The control unit executes specific software to embody a function desired by the user.

After the sale of home appliances, manufacturers may only provide simple assist such as a correction of a program error, and the like. Accordingly, when a new home appliance with new functions is released, the user needs to purchase a new home appliance. That is, the user needs to replace an existing home appliance with a new home appliance in order to use new functions, which causes user dissatisfaction. To solve the problem, the user may upgrade the software of a home appliance to improve or add functions of the home appliance.

Hereinafter, the home appliance according to the present disclosure is a device comprising an electrical appliance. The home appliance enables an upgrade of a continuous function of an electrical appliance. To this end, the home appliance may connect to a management server and a communication network.

In the present disclosure, an upgrade is mainly described. An upgrade according to the present disclosure comprises replacement, correction, cancelation, addition and the like of all or part of a software module or data required by a software module.

Additionally, the upgrade may be performed based on a variety of communication methods such as a wired method or a wireless method and the like. Further, the upgrade may be performed in such a way that a storage medium in which software needed for an upgrade is installed is coupled to a home appliance depending on the properties of the home appliance.

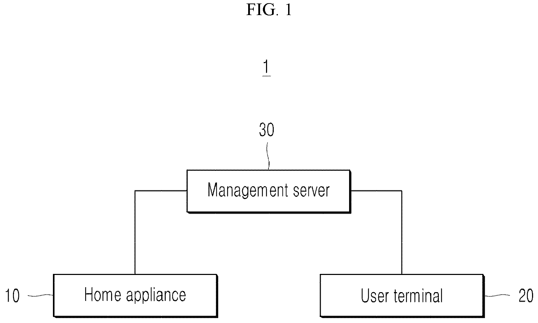

FIG. 1 is a block diagram schematically showing an entire configuration of a system for upgrading a home appliance of an embodiment.

Referring to FIG. 1, a system for upgrading a home appliance 1 (hereinafter, "system") of an embodiment of the present disclosure may comprise a home appliance 1, a user terminal 20 and a management server 30.

The home appliance 10 may denote an electronic product that is installed in a residential space of the user and performs a unique function. In an example, the home appliance 10 may comprise a refrigerator 11, an air conditioner 12, a washing machine 13, a TV, a dryer, an air purifier, a medical device, a microwave oven, an electric range, an oven and the like.

The home appliance 10 may be equipped with a communication interface or a server communication unit and the like that are needed to perform communication in a wired manner or a wireless manner. Additionally, the home appliance 10 may provide information on an upgrade to the user, based on a display of visual or acoustic information. Hereinafter, the home appliance 10 may be referred to as one of a "household appliance 10", an "electrical appliance 10", an "appliance 10", and a "product 10".

The user terminal 20 may be a device carried or possessed by the user. In an example, the user terminal 20, as a device transceiving data with a home appliance through a server to perform an upgrade, may be a smartphone, a lap top, a tablet PC and a smartwatch, or may be a home hub for households, an artificial intelligence speaker as a separate product, or may be a refrigerator, a TV and the like equipped with the function of transceiving data with a home appliance.

The management server 30 may be a device that manages the home appliance 10 remotely. The management server 30 may communicably connect to the home appliance 10 through a communication network. Additionally, the management server 30 may communicably connect to the user terminal 20, and manage the home appliance 10 in link with the user terminal 20.

In particular, the management server 30 may store information for upgrading the home appliance 10. The information stored in the management server 30 may comprise software data installed in the home appliance 10, information on the home appliance 10, information on the user and the like. The software data may comprise data (i.e., firmware data) on firmware of the home appliance 10 and data (i.e., content program data) on a content program that is executed on firmware.

### [Detailed Description of Exemplary Embodiments]

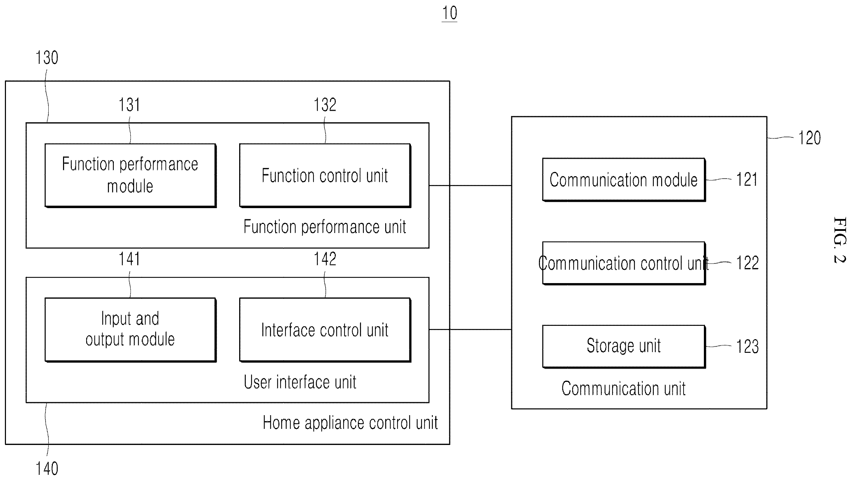

Hereinafter, the configurations of the home appliance 10, the user terminal 20 and the management server 30 are described specifically with reference to FIGS. 2 to 4.

FIG. 2 is a block diagram showing a schematic configuration of a home appliance 10 of one embodiment.

Referring to FIG. 2, the home appliance 10 of the embodiment may comprise a home appliance control unit 110 and a communication unit 120. The home appliance control unit 110 may comprise a function performance unit 130 and a user interface unit 140.

Herein, the configuration of the home appliance 10 is not limited to the configuration illustrated in FIG. 2, and a variety of additional components may be included in the home appliance 10.

The communication unit 120, the function performance unit 130 and the user interface unit 140 may transceive data with one another through a local bus.

The home appliance control unit 110 may control entire operations of the home appliance 10. The home appliance control unit 110 may correspond to a micom. The home appliance control unit 110 may operate based on main firmware.

The communication control unit 120 may transmit a package ID as firmware combination information to the management server 30, and automatically download and receive software data from the management server 30.

Additionally, when the communication unit 120 receives a preparation instruction from the management sever 30 as dependency of a content ID included in software data on a package ID is satisfied, the communication unit 120 transitions to an upgrade preparation state.

Further, the communication unit 120 may notify the upgrade preparation state to an application App of the user interface unit 140 or the user terminal 20, and then upgrade an individual function selected by the user interface unit 140 or the user terminal 20, among software data.

Further, the communication unit 120 may completely upgrade an individual function selected by the user interface unit 140 or the user terminal 20 in relation to the software data, and then based on the content ID, may control to display a message notifying that the individual function upgraded completely is settable or available, through a screen on a display module of the user interface unit 140 or in a voice through a speaker module of the user interface unit.

Though not illustrated in the drawing, the home appliance control unit 110 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the home appliance 10.

The communication unit 120 may communicate with the management server 30.

In particular, the communication unit 120 may receive software data such as firmware data and content program data from the management sever 30, store the received software data, and transmit the stored software data to at least one of the home appliance control unit 110, the function performance unit 130 and the user interface unit.

The communication unit 120 may comprise a transceiving module 121, a communication control unit 122, and a storage unit 123.

The transceiving module 121 may transceive data. The transceiving module 121 may transceiv data based on a wired and/or wireless method.

In the embodiment, the transceiving module 121 may be a short-range wireless communication module embodying short-range wireless communication. The short-range wireless communication module may be a wireless communication module based on wireless fidelity (WiFi), Bluetooth, radio frequency identification (RFID), infrared data association (IrDA), ultra-wideband (UWB), ZigBee and the like.

In the case where the transceiving module 121 is a short-range wireless communication module, an access point (not illustrated) may be provided in the residential space of the user. The access point may be a device that relays wireless communication with the management server 30 and the transceiving module 121. In an example, in the case where the transceiving module 121 is a WiFi module, the access point may be a WiFi router.

In another embodiment, the transceiving module 121 may be a long-range wireless communication module embodying long-range wireless communication. The long-range wireless communication module may be a wireless communication module based on code division multiple access (CDMA), frequency division multiple access (FDMA), time division multiple access (TDMA), orthogonal frequency division multiple access (OFDMA), single carrier frequency division multiple access (SCFDMA), 5G and the like.

The communication control unit 122 may control the transceiving module 121 and the storage unit 123. The communication control unit 122 may correspond to a micom for controlling communication. The communication control unit 122 may operate based on firmware.

The communication control unit 122 may store data, in particular, software data, which are received from the transceiving module 121, in the storage unit 123. Additionally, the communication control unit 122 may transmit the software data stored in the storage unit 123 to the home appliance control unit 110, the function performance unit 130, and the user interface unit 140, through a local bus.

The communication unit 120 may comprise a memory 123 that downloads and receives, and stores at least one or more software data from the management server 30, in advance.

The communication unit 120 may receive a selection message selecting at least a portion of software data from the user interface unit 140 among at least one or more of software data, and based on the selection message, may write that the at least a portion of software data selected in the home appliance control unit 110.

The communication unit 120 may receive a selection message selecting at least a portion of software data among at least one or more of software data from the user interface unit 140, and may download and receive the at least a portion of software data selected based on the selection message, from the management server 30, store the at least a portion of software data in the memory 123, and write the at least a portion of software data to the home appliance control unit 110 from the memory 123.

In the embodiment of the present disclosure, a memory 123 for a download may be provided in the communication unit 120, but may be provided in the home appliance control unit 110 or provided in a partial area allocated in the internal memory of the home appliance control unit 110. Software downloaded in the memory 123 of the communication unit 120 is transmitted to and written in the internal memory of the home appliance control unit 110 based on serial communication, such that an existing control program is updated or added to upgrade the home appliance 10. In the case where a download area is allocated in the internal memory of the home appliance control unit 110 in the home appliance 10, the home appliance is rebooted after a download is completed, and then allocates the download area as a control area such that the home appliance is upgraded with new software.

Though not illustrated in the drawing, the communication control unit 122 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the communication unit 120.

The storage unit 123 may be a volatile and/or non-volatile memory, and store software data received from the transceiving module 121.

The function performance unit 130 performs a unique function of the home appliance 10. That is, the function performance unit 130 may be a component that performs a unique function provided by the home appliance 10. In an example, the unique function may be a washing function of a washing machine, a drying function of a dryer, an air-conditioning function of an air conditioner, an air-purifying function of an air purifier and the like.

Accordingly, the communication unit 120 may communicate with the management server 30 to upgrade a unique function entirely or partially. Additionally, the communication unit 120 may comprise a storage unit 123 storing information on firmware and a package ID that are needed to perform a unique function.

The function performance unit 130 may comprise a function performance module 131 and a function control unit 132.

The function performance module 131 may be a module performing the function described above, and for example, comprise a driving unit comprising a motor, a heating unit, a cooling unit and the like.

The function control unit 132 may control the function performance module 131. The function control unit 132 may correspond to a micom for controlling performance of a function. The function control unit 132 may operate based on firmware.

Though not illustrated in the drawing, the function control unit 132 may comprise a processor and an internal memory. The processor and the internal memory are described above.

Further, the firmware of the communication control unit 122, the firmware of the function control unit 132, and the firmware of the interface control unit 142 may differ from one another.

The user interface unit 140 may provide operation information on a unique function, and information on an upgrade through a screen or in a voice and the like.

The user interface unit 140 may provide operation information of the home appliance 10, information on an upgrade of the home appliance 10 and the like to the user. In an example, the user interface unit 140 may comprise a display module and a speaker module. Additionally, the user interface unit 140 may receive an input for controlling an operation of the home appliance 10 from the user.

The user interface unit 140 may comprise an input and output module 141 and an interface control unit 142.

The input and output module 141 may display operation information of the home appliance 10, and information in relation to an upgrade visually and/or acoustically to the user, and receive input information. In the case where the input and output module 141 is a display module, the input and output module 141 may be a display panel.

The interface control unit 142 may control the input and outlet module 141. The interface control unit 142 may correspond to a micom for controlling an interface. The interface control unit 142 may operate based on firmware.

Though not illustrated in the drawing, the interface control unit 142 may comprise a processor and an internal memory. The processor and the internal memory are described above.

Additionally, the firmware of the communication control unit 122, the firmware of the function control unit 132, and the firmware of the interface control unit 142 may differ from one another.

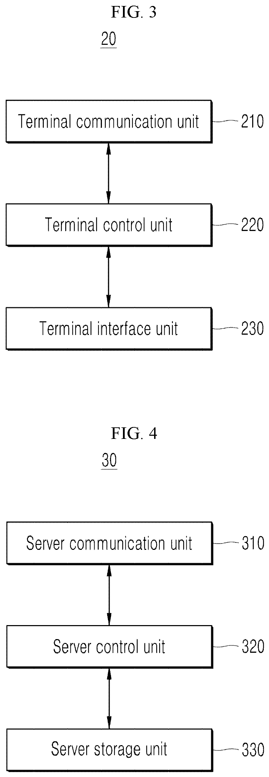

FIG. 3 is a block diagram showing a schematic configuration of a user terminal 20 of one embodiment.

Referring to FIG. 3, the user terminal 20 of the embodiment may comprise a terminal communication unit 210, a terminal control unit 220 and a terminal interface unit 230.

The terminal communication unit 210 may communicate with the management server 30. The terminal communication unit 210 may perform communication based on a wired and/or wireless method. The wireless method may comprise a short-range wireless communication method and a long-range wireless communication met.

The terminal control unit 220 may control the terminal communication unit 210 and the terminal interface unit 230.

Though not illustrated in the drawing, the terminal control unit 220 may comprise a processor and an internal memory. The internal memory may store an application App for a terminal, which is used for managing the home appliance 10. The processor may execute the application for a terminal.

The terminal interface unit 230 may display a screen on which the application for a terminal is executed. In particular, the terminal interface unit 230 may display information in relation to an upgrade of the home appliance 10 visually and/or acoustically.

FIG. 4 is a block diagram showing a schematic configuration of a management server 30 of one embodiment.

Referring to FIG. 4, the management sever 30 of the embodiment may comprise a server communication unit 310, a server control unit 320 and a server storage unit 333.

The server communication unit 310 may communicate with the home appliance 10 and the user terminal 20. The server communication unit 310 may perform communication based on a wired method and/or a wireless method. The wireless method may comprise a short-range wireless communication method and a long-range wireless communication method. The server communication unit 310 receives a package ID from the home appliance 10, as the server communication unit 310 connects to the home appliance 10 through a communication network.

The server control unit 320 may control the server communication unit 310 and the server storage unit 330.

Though not illustrated in the drawing, the server control unit 320 may comprise a processor and an internal memory. The internal memory may store an application for a management server, which is used for managing the home appliance 10. The processor may execute the application for a management server.

The server storage unit 330 may be a volatile and/or non-volatile memory, embodied in the form of a database (DB), and store information in relation to an upgrade of the home appliance 10. The information in relation to an upgrade may comprise software data installed in the home appliance 10, information on the home appliance 10, information on the user and the like. The software data may comprise the firmware data and the content program data of the home appliance 10. Additionally, the server storage unit 330 may store the package ID received from the home appliance 10 in a certain area. Accordingly, at a time point when an automatic download of software data to the home appliance 10 is completed, the server control unit 320 may determine dependency of a content ID on the package ID.

Further, the firmware data and the content program data may respectively be stored in the server storage unit 330, based on each version. In particular, the latest version of firmware data and the latest version of content program data may respectively be stored in the server storage unit 330, to upgrade software.

Further, as described above, the home appliance 10 may comprise a plurality of control units (micoms) 122, 132, 142, and the firmware of each of the plurality of control units may differ. The server storage unit 330 may store firmware data, for each of the plurality of control units 122, 132, 142.

The server control unit 320 may receive software data that has a content ID and is uploaded through an upgrade management web page. That is, the manager uploads software data having a content ID to upgrade the home appliance 10 through the upgrade management web page.

At this time, the server control unit 320 automatically downloads the software data uploaded and received to the home appliance 10.

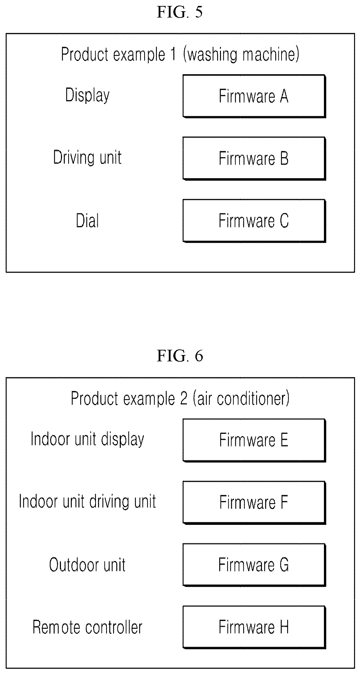

Then, as the server control unit 320 receives a software data download completion message from the home appliance 10, the sever control unit 320 determines dependency of a content ID of the software data on the package ID received from the home appliance 10. The dependency is described with reference to FIGS. 5 and 6, hereinafter.

In the case where the dependency is satisfied, the server control unit 320 transitions the home appliance to an upgrade preparation state, and controls the home appliance 10 such that an individual function of the home appliance 10 is selectively upgraded. That is, in the case were the dependency is satisfied, the server control unit 320 transmits an instruction for a transition into an upgrade preparation state to the home appliance 10. Additionally, the server control unit 320 transmits an upgrade notification message notifying that an individual function among software data may be selected and upgraded to the home appliance 10 and an app of the user terminal 20.

Additionally, the server control unit 320 may control the screen of the home appliance 10 and the app of the user terminal, to notify the screen of the home appliance 10 or the app of the user terminal that the individual function upgraded completely is settable or avaiable, after the individual function of the home appliance 10, corresponding to the content ID, is upgraded completely to the home appliance 10.

In another embodiment, the server control unit 320 may determine dependency of a content ID on the package ID before upgrade software is registered through the upgrade management web page and downloaded to the home appliance 10. In the case where the dependency is satisfied, the server control unit 320 transitions the home appliance 10 to an upgrade preparation state, and controls the home appliance to selectively download and upgrade an individual function of the home appliance 10.

Further, the server control unit 320 may manage software SW of an individual module, depending on a micom and a system structure constituting the home appliance.

FIGS. 5 and 6 are views showing an example of management of information on firmware combination of each home appliance, performed with a package ID by a management server in an embodiment.

In the management server 30 of the embodiment, the server control unit 320 may manage information on a combination of firmware SW of each module, with the package ID, to manage a function of assisted based on individual firmware for each home appliance 10.

For example, the server control unit 320, as illustrated in FIG. 5, may match and set a combination of firmware A, B and C to package ID PID-A, with respect to a washing machine provided with firmware A for a display, firmware B for a driving unit and firmware C for a dial.

At this time, the server control unit 320 may combine firmware based on each home appliance, match the combination with a package ID, and store the combination in the server storage unit 330 and manage the combination in the form of a table.

Further, the server control unit 320, as illustrated in FIG. 6, may match and set a combination of firmware E, F, G and H to package ID PID-B, with respect to an air conditioner provided with firmware E for an indoor unit display, firmware F for a driving unit of the indoor unit, firmware G for an outdoor unit, and firmware H for a remote controller, for example.

Herein, each package ID may comprise a firmware name, a package version, a content ID and function description, and one package ID may be matched with at least one or more of firmware data combinations and comprise version information on each firmware data.

As described above, the server control unit 320 may manage combination information on individual firmware for each home appliance, with a package ID.

The server control unit 320 may manage firmware combination information for each home appliance and use the firmware combination information to determine dependency of a content ID assisted for each package ID.

Additionally, the server control unit 320 may information on an individual function of the home appliance 10, as shown in table 1 hereinafter, with a content ID.

**[Table 1]**

| Content ID | Function name | Description | Type |
|---|---|---|---|
| AAA | Artificial intelligence washing | Enhance washing performance | Necessary |
| BBB | Set notification sound | Add function of selecting notification sound | Optional |
| CCC | Set display theme | Add function of selecting product start screen | Optional |
| | | | |

That is, the server control unit 320 sets one individual function of each home appliance 10 to each content ID, in such a way that an individual function is matched with a content ID, and stores the content ID in the server storage unit 330 and manages the content ID in the form of a table. Herein, each content ID may comprise a function name, function description, and the type of the characteristic of a function, and one content ID may be matched with content program data corresponding to one individual function.

The server control unit 320 may divide and manage individual functions into necessary ones and optional ones, based on the characteristic of an individual function. The server control unit 320 gives a number to a content ID and manage the content ID in relation to an individual function. At this time, a function name and function description are mapped on the content ID.

The app of the user terminal 20 may manage description of a function, based on a content ID.

At a time when the home appliance 10 communicates with the management server 30, the definition of a function may be understood based on a content ID.

In the case where the home appliance 10, the app of the user terminal 20 and the management server 30 communicate for an upgrade of an individual function and for a currently activated function and the like, the sort of funciton may be understood based on a content ID. For example, at a time when the washing machine 13, the user terminal 20 and the management server 3 communicate, the user terminal 20 and the management server 30 recognize a content ID as a function of setting a washing completion notification sound, in the case where the content ID is BBB.

The server control unit 320 may recognize firmware data assisted by a home appliance 10 having a device ID and content program data in relation to an individual function of the home appliance 10, based on a package ID received from the home appliance 10.

The server control unit 320 may determine dependency of a product firmware combination (Package ID) for an upgrade of an individual function (Content ID). To this end, the server control unit 320 may match a package ID and a content ID, and store and manage the same in the server storage unit 330, as shown in table 2 hereinafter.

**[Table 2]**

| Package ID | Package Ver. | Content ID | Remark |
|---|---|---|---|
| PID-A | 1 | AAA | AI DD 2.0 |
| | 2 | BBB | Set notification sound |
| PID-B | 1 | BBB | Set display theme |
| | 2 | CCC | Set notification sound |

For example, in the case where a package ID received from the home appliance 10 is PID-A as shown in table 2, the server control unit 320 determines whether package ID PID-A assists with content ID BBB of new software data. In table 2, package ID PID-A assists with a notification sound setting function that is content ID BBB as package version 2.

In the case where a package ID assists with a content ID, the server control unit 320 determines that dependency of the content ID on the package ID is satisfied.

The server control unit 320 may manage dependency of an SW module constituted for each electrical appliance, based on a package ID. The dependency is defined in relation to a content ID assisted for each package ID.

The version of a package ID is managed based on a change in an individual SW module.

In relation to determination of dependency of a content ID on a package ID received from the home appliance 10 and software data, the server control unit 320 may determine dependency at a time point when the software data are automatically downloaded completely to the home appliance 10, or at a time point when an upgrade function in relation to the home appliance 10 is inquired on the app of the user terminal 20.

In relation to dependency of a package ID received from the home applaice 10 and a content ID in relation to software data uploaded newly and received, the server control unit 320 may determine that the dependency of the content ID on the package ID received is satisfied, in the case where firmware data assisted by the content ID is completely downloaded to the home appliance, or in the case where firmware of the home appliance assists with the content ID.

In the case where the server control unit 320 determines that the dependency of the content ID on the package ID received is satisfied as software data is automatically downloaded completely to the home appliance 10, the server control unit 320 may control the home appliance 10 such that the home appliance 10 may transition to an upgrade preparation state. For example, the server control unit 320 may transmit a display instruction message Display Instruction Message instructing a display of an upgrade notification of new software SW Upgrade Notification to the home appliance 10.

Alternatively, in the case where the server control unit 320 determines that the dependency of the content ID on the package ID received is satisfied, the server control unit 320 may control the home appliance 10 such that the home appliance 10 may transition to an upgrade preparation state, and transmit a display instruction message instructing a display of an upgrade notification of new software SW Upgrade Notification to the home appliance 10 or the user terminal 20, such that software designated based on the user's selection may be downloaded to upgrade the home appliance.

At this time, the server control unit 320, for example, may also transmit a software upgrade preparation message to the user terminal 20 in link with the home appliance 10, while transmitting the display instruction message. The upgrade preparation message comprises functional description of software to be upgraded, or description of a change in the function of a home appliance, caused by installation of software, and the like. The management server 30 may transmit the upgrade preparation message as a push message to the user terminal 20.

The server control unit 320 may store and cash a flag indicating that a download starts to assist with content program data corresponding to the content ID, in a certain area of the server storage unit 330, at a time when software data starts to be automatically downloaded to the home appliance 10, and a function to be assisted to firmware to be automatically downloaded may transition to a downloading state, as an automatic download of the software data starts, and the server control unit 320 may control the home appliance such that the home appliance 10 may transition to a preparation state, as the automatic download of the software data is completed.

The server control unit 320 may control the home appliance 10 such that the home appliance 10 may not transition to an upgrade preparation state, as the automatic download of the software data is completed, in the case where the content ID is not dependent on the package ID received from the home appliance 10, after the automatic download of the software data is completed to the home appliance 10.

In another embodiment, the server control unit 320 may transition the home appliance 10 to an upgrade preparation state by determining dependency of the content ID on the package ID received from the home appliance 10, and in the case where software data in the upgraded preparation state is selected based on the user's input from the home appliance 10 or the user terminal 30, may control the home appliance 10 such that the selected software data in the upgrade preparation state may be downloaded to the home appliance 10 and upgrades the home appliance 10.

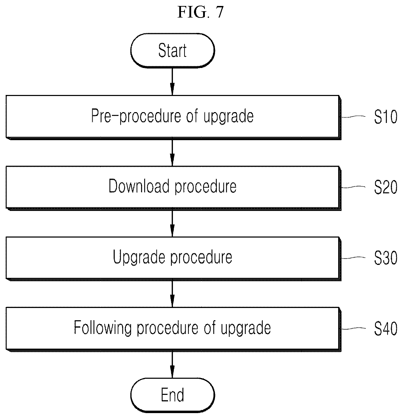

Hereinafter, a concept of a basic upgrade is described with reference to FIG. 7, based on an upgrade process of software data, performed by an upgrade system of a home appliance, before the subject matter of the present disclosure is applied.

FIG. 7 is a flowchart showing a basic upgrade method of a home appliance of one embodiment.

The upgrade method may be performed in relation to each of a plurality of home appliances 10 possessed by the user, and for convenience of description, a software upgrade method in relation to one home appliance 10 is described wit reference to FIG. 7.

The software upgrade method may be performed in such a way that the home appliance 10, the user terminal 20 and the management server 30 described above link with one another.

Hereinafter, procedures in each step are described.

In S 10, pre-procedures of an upgrade may be performed.

In S10, a home appliance 10 and the management server 30 may communicably connect to each other, information on an upgrade may be stored in the server storage unit 330, and an upgrade schedule comprising an upgrade cycle, an upgrade reservation and the like may be set.

In S20 and S30, an upgrade process may be performed.

In S20, a download procedure of the upgrade process may be performed.

Specifically, the management server 30 may transmit software data to the home appliance 10. The software data transmitted from the management server 30 may be received by the communication unit 120 of the home appliance 10 and then stored. Additionally, as described above, the software data transmitted may be firmware data or content program data.

The software data may comprise two or more firmware data, and the management server 30 may transmit two or more firmware data to the home appliance 10 consecutively. That is, in the case where two or more control units among a plurality of control units 110, 122, 132, 142 included in the home appliance 10 are upgraded, the management server 30 may transmit two or more firmware data corresponding to the two or more control units to the home appliance 10consecutively. The order of transmitting two or more firmware data may be set in advance. In an example, in the case where the function control unit 132 and the interface control unit 142 are upgraded, firmware data on the function control unit 132 may be transmitted, and then firmware data on the interface control unit 142 may be transmitted.

Alternatively, software data may comprise two or more content program data, and the management server 30 may transmit two or more content program data to the home appliance 10 consecutively. Each of two or more content program data may be data on a content program that is executed by one or more control units among the plurality of control units 110, 122, 132, 142 included in the home appliance 10. The order of transmitting two or more content program data may be set in advance.

Alternatively, software data may comprise at least one of firmware data and at least one of content program data. At this time, the management server 30 may transmit at least one of firmware data and at least one of content program data consecutively.

Then in S30, an upgrade procedure in the two procedures of the upgrade process may be performed.

Specifically, the communication unit 120 may write stored software data to a corresponding control unit among the plurality of control units 110, 132, 142. As the software data are written to the control unit, software may be installed in the control unit.

In the case where a plurality of software data stored in the communication unit 120 comprises two or more firmware data, the communication unit may write each of the two or more firmware data to a corresponding control unit. The order of writing two or more firmware data may be set in advance. In an example, in the case where the function control unit 132 and the interface control unit 142 are upgraded, firmware data on the function control unit 132 may be written, and then firmware data on the interface control unit 142 may be written.

Alternatively, in the case where a plurality of software data stored in the communication unit 120 comprises two or more content program data, the communication unit may write the two or more content program data to a corresponding control unit/corresponding control units. The order of writing two or more content program data may be set in advance.

Alternatively, in the case where a plurality of software data stored in the communication unit 120 comprises at least one of firmware data and at least one of content program data, the communication unit may write the at least one of firmware data and the at least one of content program data to a corresponding control unit/corresponding control units. The order of writing at least one of firmware data and at least one of content program data may be set in advance. In an example, in the case where a plurality of software data is firmware data and content program data in relation to the user interface unit, the firmware data may be written, and then the content program data may be written.

In S40, a following procedure of the upgrade may be performed.

In an example, in S40, a detailed function of the software upgraded completely may be set. In particular, in the case where the plurality of software is upgraded completely, a detailed function of each of the plurality of software may be set consecutively.

Hereinafter, an upgrade process of software data, performed by a system for upgrading a home appliance of an embodiment according to the present disclosure, is described.

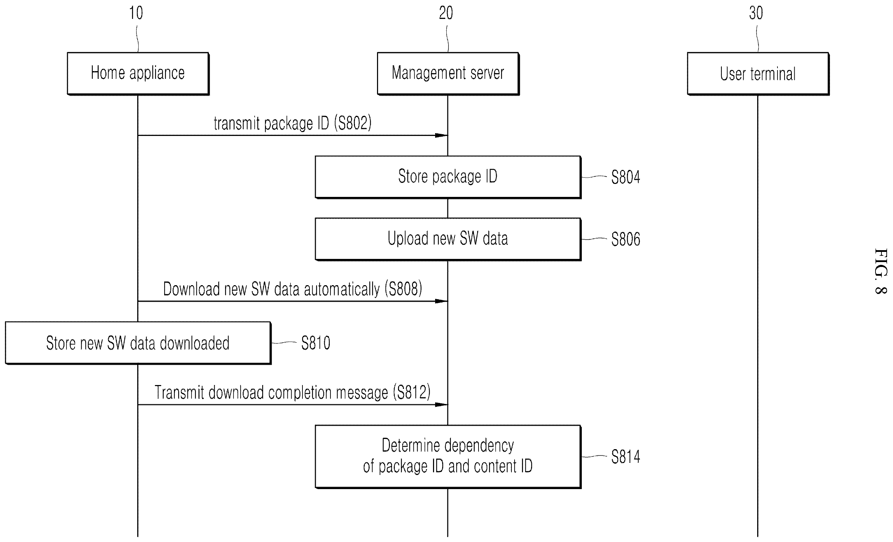

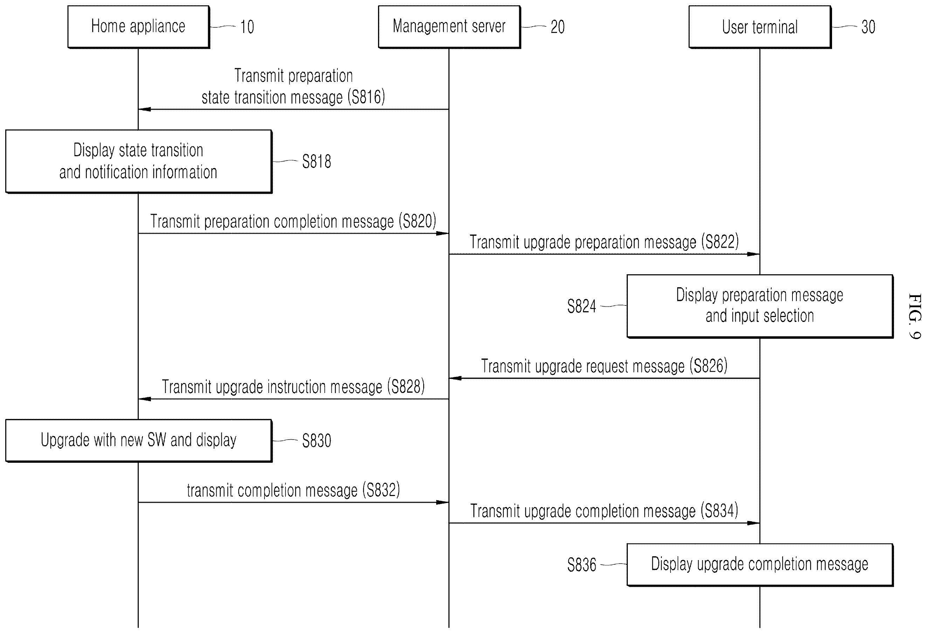

FIG. 8 and FIG. 9 are flowcharts showing a method for upgrading a home appliance of one embodiment.

Referring to FIGS. 8 and 9, a system for upgrading a home appliance 100 of the embodiment transmits a package ID to the management server 20 from the home appliance 10 (S802).

The home appliance 10 provides firmware configuration information. That is, the home appliance 10 transmits a package ID as firmware combination information, corresponding to its device ID, to the management server 30 through the communication unit 120.

The server communication unit 310 in the management server 30 receives the package ID from the home appliance 10.

Then, the server control unit 320 delivers the received package ID to the server storage unit 330, and the server storage unit 330 stores the received package ID in a certain area (S804).

Then the manager may upload new software data to upgrade the software of the home appliance 10 through the upgrade management web page. The new software data comprises a content ID in relation to an updated function, as shown in table 1.

The server control unit 320 receives the new software data that is uploaded and has a content ID through the upgrade management web page (S806).

The new software data are software that assists with a new function of the home appliance 10.

Then the server control unit 320 delivers new software data for an upgrade to the server communication unit 310 such that the server communication unit 310 transmits the new software data to the home appliance 10.

The server communication unit 310 transmits the new software data to the home appliance 10 in such a way that the server communication unit 310 automatically downloads the new software data (S808). The download may be performed at a time when the home appliance 10 performs no function or in a time slot that is set in advance for a download.

In the home appliance 10, the communication unit 120 automatically downloads and receives the new software data.

At this time, the home appliance 10 downloads and receives, and stores the new software data (S810). That is, in the home appliance 10, the communication unit 120 stores the new software data downloaded and received automatically in the storage unit 123.

Then in the home appliance 10, the communication unit 120 transmits a download completion message to the management server 30, in the case where an automatic download of the new software data is completed (S812).

The server control unit 320 determines dependency of the package ID received from the home appliance 10 and dependency of the content ID of the new software data (S814).

For example, the management server control unit 320 determines whether a package ID assists with content ID BBB of the new software data, in the case where the package ID received from the home appliance 10 is PID-A as shown in table 2. As shown in table 2, package ID PID-A assists with a notification sound setting function that is content ID BBB as package version 2. In the case where a package ID assists with a content ID as described above, the server control unit 320 determines that dependency of the content ID on the package ID is satisfied (S814).

Then in the case where the dependency is satisfied, the server control unit 320 in the management server 30 transmits an instruction for a transition to an upgrade preparation state (a preparation state transition message) to the home appliance 10 (S816).

In the home appliance 10, the communication unit 120 receives an upgrade preparation instruction (a preparation state transition message) from the management server 20, based on the satisfaction of the dependency of the content ID included in the new software data on the package ID.

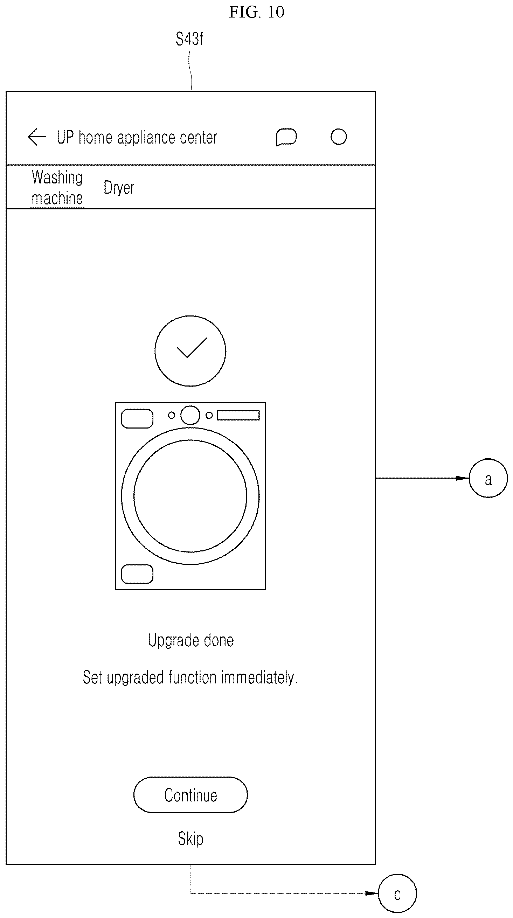

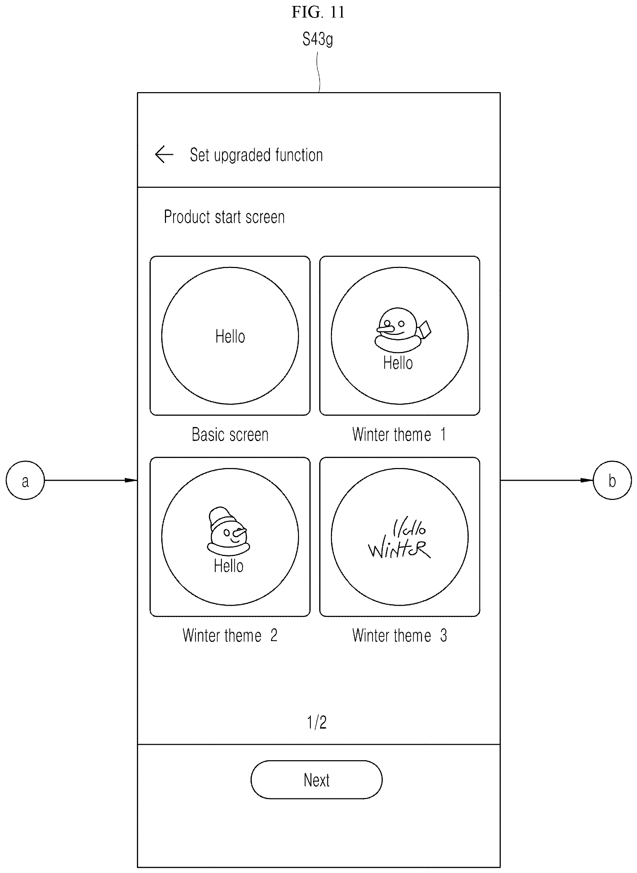

Then in the home appliance 10, the communication unit 120 receives the preparation state transition message, transitions an operation state into an upgrade preparation state, and displays notification information (S818). The transition of a state is described with reference to FIGS. 10 and 11.

Additionally, in the home appliance 10, the communication unit 120 transmits a preparation completion message to the management server 10 (S820).

For example, in the home appliance 10, the communication unit 120 may transmit the upgrade preparation message to the user interface unit 140 or the app of the user terminal 20.

Then having received the upgrade preparation message from the home appliance 10, the server control unit 320 transmits the upgrade preparation message to the user terminal 20 in link with the home appliance 10 (S822).

For example, the server control unit 320 transmits a message notifying that there is an individual function selection upgrade of the home appliance 10 to the home appliance 10 and the app of the user terminal 20.

The upgrade preparation message comprises functional description of new software to be upgraded, or description of a change in the function of the home appliance 10 and the like, caused by an upgrade of new software. The management server 30 may transmit the upgrade preparation message as a push message to the user terminal 20.

The user terminal 20 displays the upgrade preparation message through a speaker in a voice or on a screen. Thus, the user terminal 20 receives an upgrade selected by the user (S824).

If the user selects an upgrade, a repetitive notification may be canceled. Additionally, even in the case where the user cancels an upgrade, a repetitive notification may be canceled.

If the user neither selects nor cancels an upgrade in the state where the user have seen a pop-up message only, the user terminal 20 may repeat a notification based on a notification schedule.

The user terminal 20 may be a mobile phone, a smartphone, a laptop, a tablet and the like, and the user may select whether to upgrade in relation to the upgrade preparation message that is displayed in the form of a pop-up and the like on the user terminal 20. The user may select a request for an upgrade or a cancelation of an upgrade.

The user terminal 20 transmits an upgrade request message to the management server 30, based on an input of the user (S826).

The management server 30 transmits an upgrade instruction message instructing an upgrade of new software to the home appliance 10 (S828).

Having received the upgrade instruction message, the home appliance 10 may display an installation process selectively, while upgrading and installed new software (S830).

For example, an LCD may display a phrase "Software upgrading" or an LED may display an upgrade state by using numbers such as 00-99, out of the user interface unit 140 of the home appliance 10.

Additionally, in the home appliance 10, the communication unit 120 may receive an upgrade request message in relation to an individual function corresponding a content ID directly selected by the user, among new software data, from the user interface unit 140.

Accordingly, in the home appliance 10, the communication unit 120 upgrades an individual function corresponding to the content ID selected by the user, based on the upgrade request message.

The home appliance 10 may upgrade a function of a product in the state where the home appliance 10 connects to a network such as a Wi-Fi and the like. The home appliance 10 may download new software providing a new function and be upgraded after the new software is registered with the management server 30, and notify the user that the new function is added, based on a visual method or an acoustic method. Then in the case where the upgrade is completed, the home appliance 10 may perform rebooting.

Then in the case where the new software is upgraded completely, the home appliance 10 transmits an upgrade completion message (upgrade complete message) to the management server 30 (S832).

Then in the management server 30, the server communication unit 310 receives a message notifying that an individual is upgraded completely from the home appliance 10.

At this time, in the management server 30, the server control unit 320 may transmit a massage notifying that an individual function is sttable or available to the home appliance 10 or the app of the user terminal 20, as the home appliance 10 is upgraded completely.

In the home appliance 10, the communication unit 120 may display a message notifying that an individual function upgraded completely is settable or available, on the screen of the input and output module 141 of the user interface unit 140 or in a voice through a speaker of the user interface unit 140, after the individual function corresponding to the selected content ID is upgraded completely.

As the management sever 30 receives an upgrade completion message from the home appliance 10, the management server 30 transmits the upgrade completion message (upgrade complete message) to the user terminal 20 (S834).

The user terminal 20, as illustrated in FIG. 10, displays a message S43f notifying that the upgrade is completed (S836), and accordingly, the user may see the completely upgraded function. FIGS. 10 to 13 are views showing an example of control of an individual function upgraded of a home appliance, on a user terminal of an embodiment.

Then the user terminal 20 may display a screen for controlling an upgraded function, as illustrated in FIG. 11 (S43g).

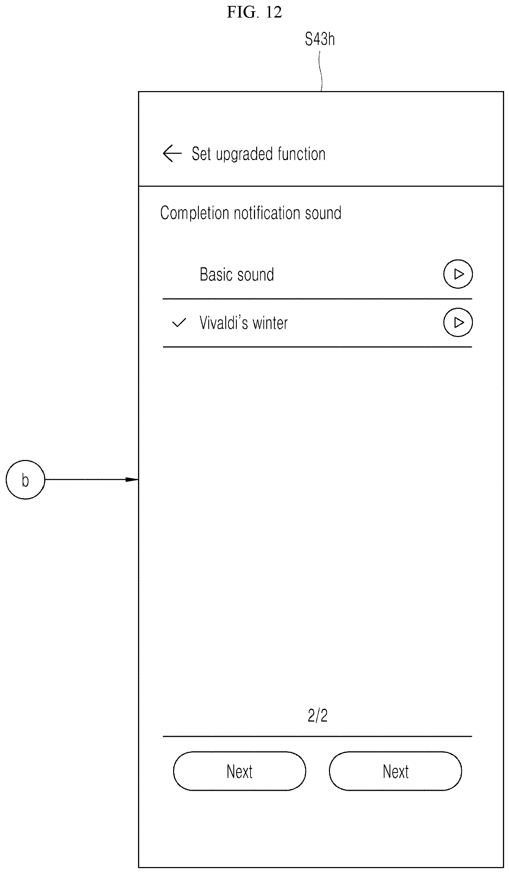

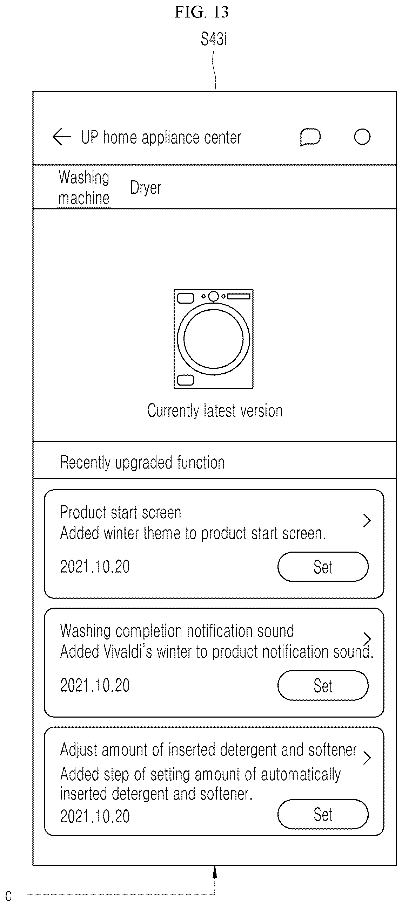

The user terminal 20, for example, may give an instruction to set or change a function to a washing machine that is the home appliance 10 as illustrated in FIGS. 12 and 13 (S43h, S43i), and the instruction may be delivered to the washing machine via the management server 30. In the case where the user selects a skip in S43f, S43i may proceed.

In another embodiment, at a time point when a new content program is registered with the management server 30, the management server 30 may determine dependency of a content ID on a package ID, transition the home appliance to an upgrade preparation state and provide a list of upgradable content programs to the user terminal 20, and as the user inputs a selection, may selectively download a content program selected by the user terminal 20 to the home appliance 10, to upgrade the home appliance 10.

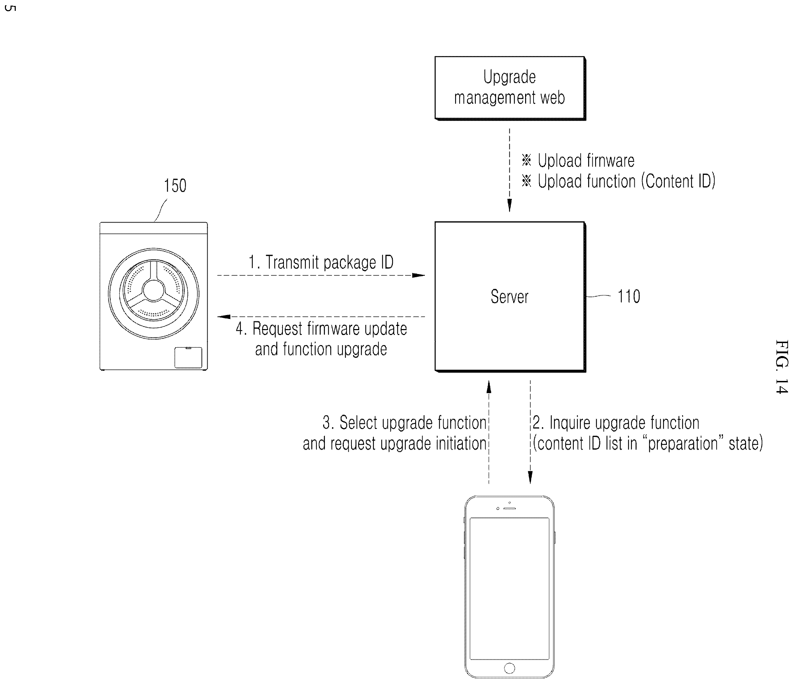

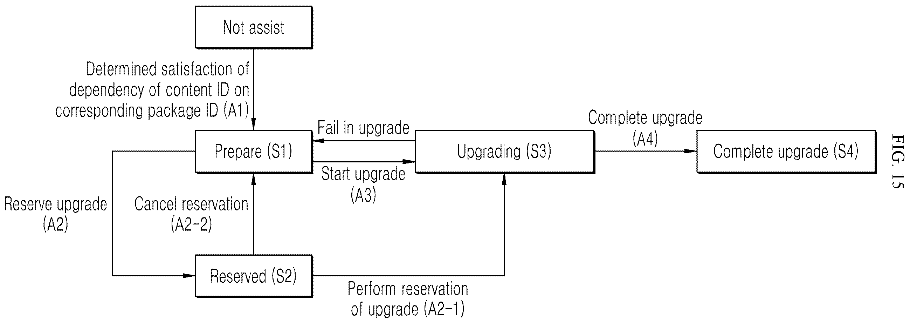

FIGS. 14 and 15 are views showing a flow of a transmission packet and a transition view of an operation state in the system for upgrading a home appliance of an embodiment.

Referring to FIGS. 14 and 15, the system for upgrading a home appliance 1 of the embodiment may manage a state in relation to a function upgrade for each product. At this time, the upgrade state of an individual function of a specific device may change based on the state transition view in FIG. 10

The home appliance 10 transmits a package ID to the management server 30 (1), and the management server 30 receives firmware (a package ID) and new software data that has a function (a content ID) and is uploaded through the upgrade management web page.

The management sever 30, as described with reference to the above examples, automatically download the new software data to the home appliance 10 and receives a download completion message from the home appliance 10 as the download is completed.

At this time, the management server 30 determines dependency of a content ID on a corresponding package ID, and when determining that the dependency is satisfied, transitions to an upgrade preparation state (S1).

The management server 30 transmits a notification to the app of the user terminal 20 in the case where the upgrade preparation state is determined. When determining that the dependency of a specific content ID is satisfied as firmware of the package ID is downloaded completely, the management server 30 sends a notification indicating that an upgrade is ready to the app of the user terminal 20.

In the case of a product with a display, a screen showing that an upgrade is ready is displayed on the display of the product as the home appliance 10.

Additionally, in an upgradable state, the home appliance 10 and the management server may notify a preparation state even when a product of the home appliance 10 performs a specific operation.

For example, in a product the power of which is turned on/off, in the case where there is a new content ID in a preparation state as the user turns on the power, the home appliance 10 notifies a new upgrade on the display of the product or through a speaker of the product in a voice. The management server 30 sends a push message notifying that there is a new upgrade, to the app of the user terminal 20.

Additionally, in a refrigerator that is turned on all the time, in the case where there is a new content ID in a preparation state at a predetermined specific time point, e.g., as the door of the refrigerator is opened, the management server 30 may send a push message notifying that there is a new upgrade on the display of the product, or in a voice through a speaker of the product, or an app of the user terminal 20.

In the case where the user who saw a message notifying a new upgrade from the user terminal 20 reserves an upgrade, e.g., there is an upgrade initiation two hours later and the like A2, as described above, the management server 30 transitions to a reservation state (S2).

In the reservation state (S2), as reservation time comes, the management server 30 controls ... such that ... performs an upgrade reservation A2-1, and transitions an operation state to an upgrading state (S3).

Additionally, in the preparation state (S1), even in the case where an upgrade initiation A3 is performed based on an input of a reservation initiation from the home appliance 10 or the user terminal 20, the management server 30 transitions an operation state to an upgrading state (S3).

In the case where an upgrade fails while the upgrade is underway, the management server 30 transitions an upgrading state to a preparation state (S1).

In the case where an upgrade of new software data proceeds well in the home appliance 10 and the management server 30 receives an upgrade completion message from the home appliance 10, the management server 30 transitions an upgrading state to an upgrade completion state (S4).

The above-described state transition view in FIG. 15 is applicable to the home appliance 10 and the user terminal 20 as well as the management server 30.

Further, in situations described hereinafter, a new upgrade present in the home appliance 10 may not be additionally notified. The situations include a situation where the user presses a confirmation of a pop-up notifying a new upgrade, displayed on a display, and a situation where the user recognizes a certain number or more of notifications, in the case of a touchable product. Herein, the certain number is the number of app notification sendings or the number of voice notifications of a speaker and the like.

As described above, in the system for upgrading a home appliance 1 according to the present disclosure, the user may select an individual function to be upgraded and upgrade the individual function.

The upgrade is possible basically on the app of the user terminal 20, and in a product with a display, upgrade menus may be provided through the display of the product in the same way.

At a time when an upgrade function of the user terminal 20 is inquired, the management server 30 delivers a list of content IDs in the preparation state to the user terminal 20.

Then the user terminal 20 may select a function from the delivered list, and transmit an upgrade initiation instruction.

As the initiation instruction is transmitted from the user terminal 20, the home appliance 10 and the management server 30 transition to an upgrading state, and at a time when the upgrade is completed, transition to an upgraded state, and the management server 30 notifies results of the upgrade to the product of the home appliance 10 and the app of the user terminal 20.

Accordingly, after the upgrade is completed, each of the upgraded functions becomes available on the app of the user terminal 20 and the display of the product of the home appliance 10 and then is available.

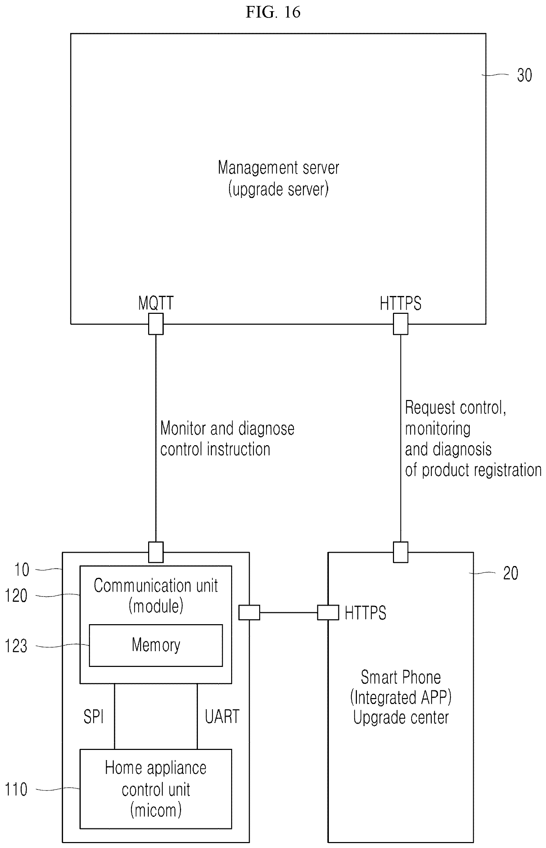

FIG. 16 is a view showing specific communication among the management sever, the home appliance and the user terminal of one embodiment.

FIG. 16 shows some of the components in the configuration of FIG. 2, but the components are not limited.

Referring to FIG. 16, the system for upgrading a home appliance 1 may comprise a home appliance 10, a user terminal 20 and a management server 30.

The management server 30 is an upgrade server that stores upgrade software and transmits the upgrade software to the home appliance.

The user terminal 20 may set a network of the home appliance 10.

The home appliance 10 comprises a home appliance providing an IoT function. The home appliance 10 may comprise a communication unit 120 such as a modem, a storage unit 123 such as a memory, and a home appliance control unit 110 such as a micom

The communication unit 120 and the home appliance control unit 110 may perform communication, by using a universal asynchronous receiver/transmitter (UART) communication protocol and a serial peripheral interface (SPI) communication protocol. Certainly, in addition to the UART or the SPI, the communication unit 120 and the home appliance control unit 110 may transceive information based on a communication protocol such as a variety of serial/parallel communication methods, a variety of synchronous/asynchronous communication methods and the like. The home appliance control unit 110 comprises a function control unit in charge of one or more functions of the home appliance, an interface control unit such an LCD, an LED, a speaker, a buzzer and the like capable of monitoring the function of a product and the installation of an upgrade, and the like.

The home appliance 10 and the management server 30 may perform communication by using a message queuing telemetry transport (MQTT) communication protocol. For example, the management server 30 may transceive a message in relation to a control instruction, monitoring and a diagnosis, with the home appliance 10, by using the MQTT communication protocol.

The home appliance 10 and the user terminal 20 may perform communication by using a hyper text transfer protocol over secure socket layer (HTTPS) communication protocol. For example, the management server 30 may transceive a message in relation to a product registration, a control request, a monitoring request and a diagnosis request, with the user terminal 20, by using the HTTPS communication protocol.

The user terminal 20 and the management server 30 may also transceive information data by using the HTTPS communication protocol.

The user terminal 20 may be a smartphone in which an integrated application App for managing and controlling the home appliances 10 is installed. The user terminal 20 may provide an upgrade center managing an upgrade in relation to software data and providing information on an upgrade, on the app, in the form of a menu.

The management server 30 provides software data to be upgraded, to the home appliance 10.

The home appliance 10 transmits a package ID in relation to a firmware combination to the management server 30 in a regular cycle or each time the home appliance 10 communicably connects to the management server 30.

The management server 30 stores a package ID received from the home appliance 10 in the storage unit, and when receiving software data that has a content ID and is uploaded through an upgrade management web page, downloads the software data to the home appliance 10 automatically.

In the home appliance 10, the home appliance control unit 110 automatically downloads and receives the software data from the management server 30 through the communication unit 120 and stores the software data in the memory 123 of the communication unit 120, and transmits a download completion message to the management server 30.

As the management server 30 receives the download completion message, the management server 30 determines dependency of the received package ID and the content ID, and in the case where the dependency is satisfied, transmits a preparation instruction message instructing a transition to an upgrade preparation state, to the home appliance 10.

The home appliance 10 transitions to the upgrade preparation state, according to the received preparation instruction message, and transmits an upgrade notification message on a screen or to the app of the user terminal.

The home appliance 10 upgrades an individual function that is input through the screen or selected by the user terminal 20, among the software data.

That is, in the home appliance 10, the home appliance control unit 110 moves the software of the individual function selected by the user, from the memory 123 of the communication unit 120, among the software data downloaded, and writes the software of the individual function to the memory of the home appliance control unit 110.

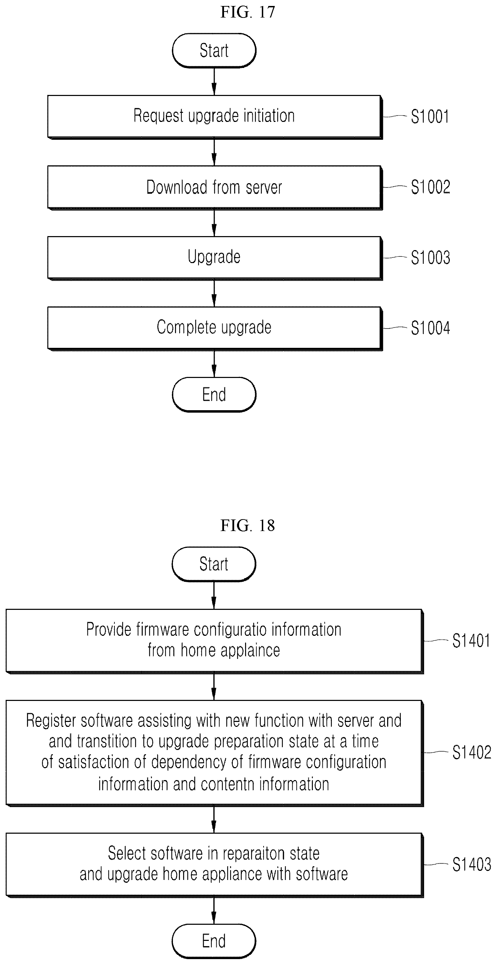

FIG. 17 is a view showing an upgrade process in another embodiment.

In the case where upgrade particulars to be applied to the home appliance are newly registered with the management server 30, a selection, a download and then an upgrade may proceed according to the flow of FIG. 17. This shows that the user selects and requests an upgrade to start a download before a download to the home appliance.

As software such as a program, data and the like needed for an upgrade is registered with the management server 30, upgradable software is inquired, and a list of upgradable software is displayed, through the user interface unit 140 of the home appliance 10 or the app of the user terminal 20.

Additionally, as one or more of upgradable software is selected by the user through the user interface unit 140 of the home appliance 10 or the app of the user terminal 20, the home appliance 10 or the user terminal 120 requests an initiation of an upgrade from the management server 30 (S1001).

Then the home appliance 10 downloads the selected software from the management server 30 (S1002).

After the download is completed, the home appliance 10 installs/writes the downloaded software in the home appliance control unit 110, to perform an upgrade (S1003).

After the upgrade is completed (S1004), the home appliance 10 may perform rebooting.

Further, the user interface unit 140 of the home appliance 10 or the app of the user terminal 20 may notify or display an upgraded function.

FIG. 18 is an operational flowchart showing a method for upgrading a home appliance of another embodiment.

In another embodiment illustrated in FIG. 18, when software assisting with a new function of the home appliance 10 is registered with the management server 30, dependency of a content ID is determined to upgrade the home appliance 10.

Referring to FIG. 18, the method for upgrading a home appliance of another embodiment involves providing firmware configuration information from the home appliance 10 (S1401).

The firmware configuration information may comprise firmware information of the home appliance 10 or a package ID that is firmware combination information corresponding to a device ID of the home appliance 10.

Then software assisting with a new function of the home appliance 10 is registered with the server, and in the case where dependence of the firmware configuration information and information on contents of the software are satisfied, the transitions the software to an upgrade preparation state (S1402).

That is, the dependency of a package ID as firmware configuration ID and the dependency of a content ID of new software are determined. At this time, the home appliance 100, and the management server 30 may determined the dependency.

Additionally, the home appliance 10, and the management sever 30 may transition to an upgrade preparation state. The home appliance 10 downloads software to the memory of the communication unit 120, and transitions the software to an upgrade preparation state.

Then the software in the upgrade preparation state is selected and upgraded to the home appliance 10 (S 1403).

Further, in the case of a plurality of software, one in the upgrade preparation state may be selected.

Further, software registered with the management server 30 may all be downloaded to the home appliance 10 in advance before the software is transitioned to the upgrade preparation state.

Further the software registered with the management server 30 may be selected in the upgrade preparation state and then selectively downloaded to the home appliance 10.

According to the present disclosure, provided are a home appliance, a method for upgrading a home appliance, a management server, a method by which a management server upgrades a home appliance, and a system for upgrading a home appliance, which upgrade a home appliance comprising a refrigerator, a washing machine, an air conditioner and the like.

The embodiments are described above with reference to a number of illustrative embodiments thereof. However, the present disclosure is not intended to limit the embodiments and drawings set forth herein, and numerous other modifications and embodiments may be devised by one skilled in the art. Further, the effects and predictable effects based on the configurations in the disclosure are to be included within the range of the disclosure though not explicitly described in the description of the embodiments.

### [Industrial applicability]

The subject matter of the present disclosure is applicable to a home appliance comprising a refrigerator, a washing machine, an air conditioner and the like.

## Claims

1. A management server, comprising:
a server communication unit configured to receive a package ID (Package ID) from a home appliance;
a server storage unit configured to store the received package ID; and
a server control unit configured to download software data having a content ID (Content ID) to the home appliance in a case where the server control unit receives the software data uploaded through an upgrade management web page, to determine dependency of the received package ID and the content ID, to transition the software data to an upgrade preparation state in a case where the dependency is satisfied, and to control the home appliance such that an individual function of the home appliance is selectively upgraded.

2. The management server of claim 1, wherein the server control unit controls such that after the software data are automatically downloaded completely to the home appliance and then an individual function of the home appliance, corresponding to the content ID, is upgraded completely, setting or availability of the completely upgraded individual function is notified to a screen of the home appliance or an app (App) of a user terminal.

3. The management server of claim 1, wherein the software data comprises firmware data and content program data of the home appliance.

4. The management server of claim 3, wherein the package ID comprises a firmware name, a package version, the content ID, and function description, and
one package ID is matched with a combination of at least one or more of the firmware data and comprises version information of each of the firmware data.

5. The management server of claim 1, wherein the content ID comprises a function name, function description, and a type of a function characteristic, and
one content ID is matched with content program data corresponding to one individual function.

6. The management server of claim 1, wherein the server control unit recognizes firmware data that is assisted by the home appliance having a device ID (Device ID), and content program data in relation to an individual function of the home appliance, based on the package ID received from the home appliance.

7. The management server of claim 1, wherein in relation to determination of dependency of the received package ID and the content ID, the server control unit determines the dependency of the received package ID and the content ID at a time point when the software data are automatically downloaded completely to the home appliance, or at a time point when an upgrade function in relation to the home appliance is inquired on an app (App) of a user terminal.

8. The management server of claim 1, wherein in relation to dependency of the received package ID and the content ID, the server control unit determines that dependency of the content ID on the received package ID is satisfied in a case where firmware data assisted by the content ID is completely downloaded to the home appliance, or in a case where firmware of the home appliance assists with the content ID.

9. The management server of claim 7 or claim 8, wherein when determining that the software data are automatically downloaded completely to the home appliance and that the dependency of the content ID on the received package ID is satisfied, the server control unit controls the home appliance such that the home appliance transitions to an upgrade preparation state.

10. The management server of claim 7 or claim 8, wherein at a time point when the software data starts to be downloaded automatically to the home appliance, the server control unit stores and cashes a flag notifying that a download starts to assist with content program data corresponding to the content ID, in a certain area of the server storage unit, and as the software data starts to be downloaded automatically, a function to be assist with firmware to be downloaded automatically transitions to a downloading state, and as the software data are automatically downloaded completely, the server control unit controls the such that the transitions to a preparation state.

11. The management server of claim 7 or claim 8, wherein in a case where the content ID is not dependent on the received package ID after the software data are automatically downloaded completely to the home appliance, the server control unit controls the home appliance such that the home appliance does not transition to an upgrade preparation state.

12. The management server of claim 1, wherein the server control unit determines that dependency of the content ID on the received package ID and transitions the software data to an upgrade preparation state, and in a case where software data in an upgrade preparation state is selected by the home appliance or based on a user input from a user terminal, the server control unit controls the such that the selected software data in the upgrade preparation state are downloaded to the home appliance and upgrade the home appliance.

13. The management server of claim 1, wherein the server control unit determines dependency of the content ID on the received package ID before receiving the software data uploaded, registering the software data with the server storage unit and downloading the software data to the home appliance, and in a case where the dependency is satisfied, the server control unit transitions the home appliance to an upgrade preparation state and controls the home appliance to selectively download and upgrade an individual function of the home appliance.

14. The management server of claim 1, wherein the server control unit determines dependency of the content ID on the received package ID and transitions the home appliance to an upgrade preparation state at a time point when the server control unit receives the software data uploaded and registers the software data with the server storage unit, provides a list of upgradable content programs to the user terminal, and based on a selection input of a user, downloads a content program selected by the user terminal selectively to the home appliance, and controls the home appliance such that the home appliance is upgraded.

15. A home appliance, comprising;
a function performance unit configured to perform unique functions;
a communication unit configured to communicate with a management server to upgrade all or part of the unique functions;
a storage unit configured to store information on firmware needed to perform the unique functions and a package ID (Package ID);
a user interface unit configured to provide operation information on the unique functions, and information on an upgrade; and
a home appliance control unit configured to connect to the communication unit through a local bus, and to control entire operations,
wherein the communication unit transmits the package ID to the management server, automatically downloads and receives software data from the management server, transitions to an upgrade preparation state in a case where dependency of a content ID (Content ID) included in the software data on the package ID is satisfied and then the communication unit receives a preparation instruction from the management server, and notifies the preparation state to the user interface unit or an app (App) of the user terminal and then upgrades an individual function selected by the user interface unit or the user terminal among the software data.

16. The home appliance of claim 15, wherein after an individual function selected by the user interface unit or the user terminal is completely upgraded in relation to the software data, the communication unit controls such that displays a message notifying that the individual function upgraded completely is settable or available, based on the content ID, through a screen on a display module of the user interface unit or in a voice through a speaker module of the user interface unit.

17. The home appliance of claim 15, wherein the communication unit comprises a memory configured to download and receive at least one or more of the software data from the management server and to store the same in advance, and
the communication unit receives a selection message selecting at least a portion of software data among the at least one or more of the software data from the user interface unit, and based on the selection message, writes (write) the at least a portion of software data selected to the home appliance control unit.

18. The home appliance of claim 15, wherein the communication unit receives a selection message selecting at least a portion of software data among at least one or more of the software data from the user interface unit, and downloads and receives the at least a portion of software data selected based on the selection message, from the management sever, and stores the at least a portion of software data in a memory, and writes (write) the at least a portion of software data in the home appliance control unit from the memory.

19. The home appliance of claim 15, wherein the home appliance control unit comprises an internal memory to which a partial download area is allocated to write the software data downloaded and received from the management server, and
the communication unit completely downloads the software data in the download area of the internal memory from the management server, and after rebooting (rebooting), allocates the download area to a control area and upgrades the download area with the software data.

20. A method by which a management server upgrades a home appliance, comprising;
receiving a package ID (Package ID) from a home appliance by a server communication unit; storing the received package ID by a server storage unit;
receiving software data having a content ID (Content ID) and being uploaded through an upgrade management web page by a server control unit;
automatically downloading the software data to the home appliance by the server communication unit;
determining dependency of the received package ID and the content ID by the server control unit;
transmitting an instruction for a transition to an upgrade preparation state to the home appliance by the server control unit in a case where the dependency is satisfied; and
transmitting a message notifying that there is an individual function selection upgrade of the home appliance to the home appliance and a user terminal by the server control unit.

21. The method of claim 20, further comprising:
receiving a message notifying that an individual function is completely upgraded from the home appliance by the server communication unit; and
transmitting a message notifying that an individual function is settable or available to the home appliance or the user terminal by the server control unit as the home appliance is upgraded completely.

22. The method of claim 20, wherein transmitting a message notifying that an individual function is settable or available to the home appliance or the user terminal comprises in a case where the server control unit determines that dependency of the content ID on the received package ID is satisfied, controlling the home appliance such that the home appliance transitions to an upgrade preparation state by the server control unit, and transmitting a display instruction message (Display Instruction Message) instructing a display of an upgrade notification of the software data (SW Upgrade Notification) to the home appliance or the user terminal by the server control unit and controlling by the server control unit such the software data designated based on a user selection are download and upgrade the home appliance.

23. A method for upgrading a home appliance, comprising:
transmitting a package ID (Package ID) to a management server by a communication unit;
automatically downloading and receiving software data from the management server by the communication unit;
transmitting a download completion message to the management server by the communication unit;
receiving an upgrade preparation instruction from the management server by the communication unit as dependency of a content ID (Content ID) included in the software data on the package ID is satisfied;
transitioning to an upgrade preparation state by the communication unit;
transmitting the upgrade preparation message to a user interface unit or a user terminal by the communication unit;
receiving an upgrade request message in relation to an individual function corresponding to a content ID selected among the software data from the user interface unit or the user terminal by the communication unit; and
upgrading an individual function corresponding to the selected content ID by the communication unit.

24. The method of claim 23, further comprising:
after an individual function corresponding to the selected content ID is completely upgraded, displaying a message notifying that the completely upgraded individual function is settable or available by the communication unit through a screen on a display module of the user interface unit or in a voice through a speaker module of the user interface unit.

25. A system for upgrading a home appliance, comprising:
a management server configured to provide software data;
a home appliance configured to transmit a package ID in relation to a firmware combination to the management server; and
a user terminal configured to receive an upgrade preparation message in relation to the software data from the management server, to output the upgrade preparation message to an app (App), and to transmit an upgrade request message to the management server based on a selection input in relation to the software data,
wherein the management server stores the package ID received from the home appliance, and when receiving software data having a content ID and being uploaded through an upgrade management web page, automatically downloads the software data to the home appliance,
in the home appliance, a communication unit automatically downloads and receives the software data from the management server, and stores the software data in a memory, and transmits a download completion message to the management server,
when receiving the download completion message, the management server determines dependency of the received package ID and the content ID, and when the dependency is satisfied, transmits a preparation instruction message instructing a transition to an upgrade preparation state to the home appliance,
the home appliance transitions to an upgrade preparation state, based on the received preparation instruction message, and transmits an upgrade notification message on a screen or to a user terminal, and
the home appliance upgrades an individual function input through the screen or selected by the user terminal, among the software data.

26. A method for upgrading a home appliance, comprising:
providing firmware configuration information from a home appliance;
in a case where software assisting with a new function of the home appliance is registered with a server and dependency of information on the firmware configuration information and on content of the software is satisfied, transitioning the software to an upgrade preparation state; and
selecting software in the upgrade preparation state and upgrading the software to the home appliance.

27. The method of claim 26, wherein the method further comprises selecting one of the software in the upgrade preparation state.

28. The method of claim 26, wherein the method further comprises downloading all software registered with the server to the home appliance in advance before a transition to the upgrade preparation state.

29. The method of claim 26, wherein the method further comprises selecting software registered with the server in the upgrade preparation state, and then selectively downloading the software to the home appliance.
